## Europäisches Patentamt
## European Patent Office
## Office européen des brevets

(19)

(11) Veröffentlichungsnummer: **0 291 451**
**A1**

# EUROPÄISCHE PATENTANMELDUNG

(12)

(21) Anmeldenummer: **88810252.2**

(22) Anmeldetag: **21.04.88**

(51) Int. Cl.⁴: **G 05 B 19/10**

(30) Priorität: **15.05.87 CH 1890/87**

(43) Veröffentlichungstag der Anmeldung:
**17.11.88 Patentblatt 88/46**

(84) Benannte Vertragsstaaten:
**CH DE GB IT LI SE**

(71) Anmelder: **FRITZ GEGAUF AG
BERNINA-NAEHMASCHINENFABRIK
Seestrasse
CH-8266 Steckborn (CH)**

(72) Erfinder: **Hangarter, Otto
Im Bohl 12
D-7763 Oehningen/Wangen (DE)**

**Guettinger, Werner
Hinterhubstrasse 2
CH-8413 Neftenbach (CH)**

(74) Vertreter: **Steiner, Martin et al
c/o AMMANN PATENTANWAELTE AG BERN
Schwarztorstrasse 31
CH-3001 Bern (CH)**

(54) **Einstell- und Anzeigevorrichtung für mindestens einen Parameter.**

(57) Zur Einstellung der Stichlänge und -breite einer Nähmaschine sind Einstellknöpfe (1,2) vorgesehen, mit welchen Blenden (6,7) verbunden sind. Die Blenden können Schlitze (8,9) je nach Einstellung mehr oder weniger abdecken und damit die eingestellten Werte sinnfällig anzeigen. Den Schlitzen sind Skalen (23,24) und Reihen von Leuchtdioden (22) zugeordnet. Die Leuchtdioden dienen dazu, abgespeicherte Grundeinstellwerte anzuzeigen. Mittels Umschaltern (1b,2b) ist eine Umschaltung auf eine Steuerung der Stichlänge und Stichbreite anhand der Grundwerte oder aber anhand manuell eingestellter Werte möglich. Die Einstell- und Anzeigemittel sind einfach und es kann eine völlig unabhängige, gegenseitig unbeeinflussbare Steuerung entweder anhand von Grundwerten oder anhand willkürlich gewählter Werte erfolgen.

FIG. 1

EP 0 291 451 A1

**Beschreibung**

## Einstell- und Anzeigevorrichtung für mindestens einen Parameter

Die vorliegende Erfindung betrifft eine Einstell-,Steuer- und Anzeigevorrichtung für mindestens einen Parameter, insbesondere die Stichlänge oder -breite an einer Nähmaschine, insbesondere eine Vorrichtung, bei der wahlweise vorprogrammierte Grundwerte oder mittels eines Einstellorgans willkürlich gewählte Werte des Parameters einstellbar, steuerbar und anzeigbar sind. Eine derartige vollautomatische Einstell- und Anzeigevorrichtung für vollelektronische Nähmaschinen ist bekannt aus der EP-A-0 177 441. Im Gegensatz zu bekannten Einstell- und Anzeigevorrichtungen bietet diese bekannte Ausführung optimale Bedingungen hinsichtlich der beliebigen, willkürlichen Wahl von Nähbedingungen. Einerseits werden der Bedienungsperson empfohlene Grundwerte für bestimmte Stichmuster angezeigt, aber die Bedienungsperson ist völlig frei, diese Parameter abzuändern. Nachteilig ist die bekannte Ausführung nur insofern, als die vollelektronische Abspeicherung aller Grundwerte und willkürlich vorgewählter Werte in elektronischen Speichern und die gleichzeitige verschiedenartige Anzeige der Grundwerte und willkürlich eingestellter Werte auf ein- und denselben Diodenreihen vom Material und von der Programmierung her recht aufwendig ist. Eine ähnliche Vorrichtung ist auch aus der US-A-4'236'467 bekannt.

Ziel vorliegender Erfindung ist es, den Aufwand durch eine besonders einfache Anzeige der willkürlich gewählten Werte zu reduzieren. Dieses Ziel wird gemäss dem Kennzeichen des Anspruchs 1 erreicht.

Vorzugsweise wird auch eine klare Trennung der Anzeige und des steuernden Einflusses von Grundwerten und und willkürlich gewählten Werten dadurch angestrebt, dass getrennte Anzeigen für Grundwerte und willkürlich gewählte Werte vorgesehen sind, und dass Umschaltmittel zur Steuerung entweder nach einem Grundwert oder nach einem willkürlich gewählten Wert vorgesehen sind. Die scheinbare Erhöhung des Aufwandes durch die Anordnung getrennter Anzeigen wird mehr als wettgemacht durch die besondere Einfachheit dieser Anzeigen und insbesondere die Einfachheit der zugeordneten Elektronik. Zur Anzeige der Grundwerte können einfache Reihen von einzelnen Leuchten, beispielsweise Leuchtdioden, vorgesehen sein, und zur Anzeige der willkürlich gewählten Werte können mit Einstellorganen direkt verbundene Blenden vorgesehen sein, welche vor bzw. hinter Sichtdurchbrechungen der Frontplatte der Nähmaschine beweglich sind. Zur Umschaltung von der einen auf die andere Betriebsart genügen einfache Umschalter. Eine Anzeige der Betriebsart kann durch unterschiedliche Speisung, beispielsweise kontinuierliche bzw. blinkende Speisung der Leuchten erfolgen.

Aufbau und Vorteile der Erfindung werden im folgenden anhand eines in der Zeichnung dargestellten Ausführungsbeispiels näher erläutert.

Fig. 1 zeigt eine Ansicht der Frontplatte einer Nähmaschine und

Fig. 2 ist ein Schnitt nach Linie II-II in Fig. 1 in grösserem Massstab.

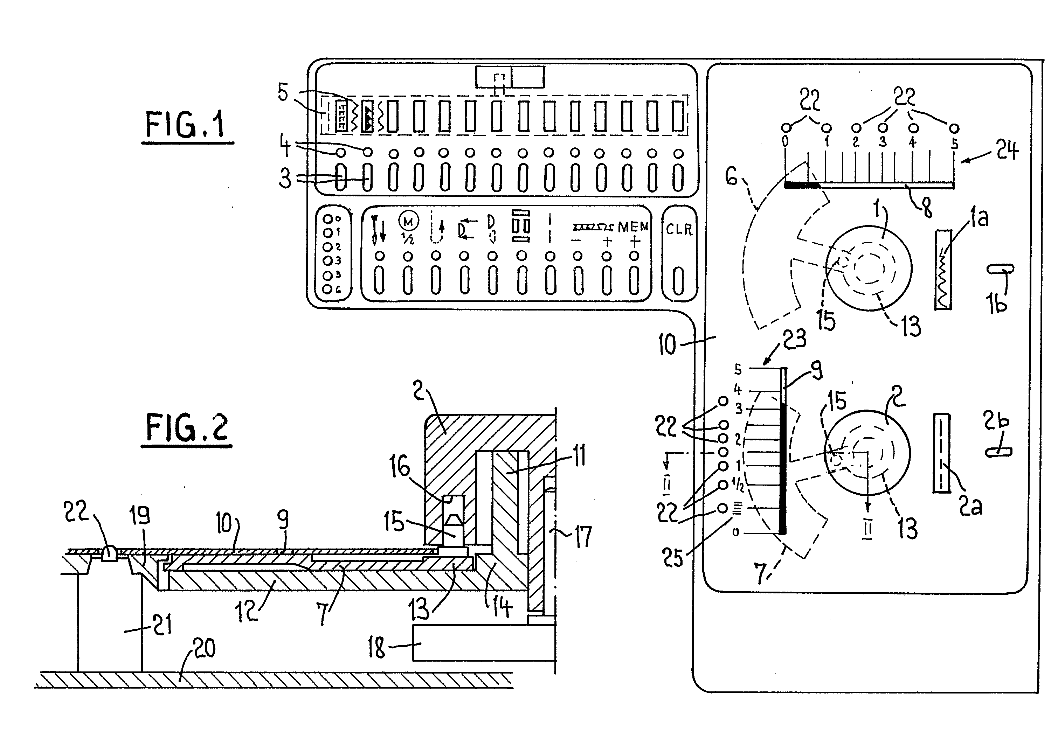

Fig. 1 zeigt die Frontplatte einer elektronischen Nähmaschine mit Einstell- und Anzeigeorganen. Insbesondere sind Einstellknöpfe 1 und 2 zur manuellen, willkürlichen Einstellung der Stichbreite bzw. Stichlänge vorgesehen, und Symbole 1a bzw. 2a neben diesen Einstellknöpfen zeigen an, welcher Parameter mit dem jeweiligen Einstellknopf eingestellt werden kann. In einem weiteren Feld der Frontplatte sind Wählschalter 3, Kontrollampen 4 und Symbole 5 zur Vorwahl einzelner Nutz- und Zierstricharten vorgesehen. Solche Vorwahleinrichtungen sind an modernen elektronischen Nähmaschinen allgemein üblich und bedürfen keiner weiteren Erläuterung. Jeder Stichart ist in einem elektronischen Speicher mindestens ein Grundeinstellwert für die Stichlänge oder für die Stichbreite zugeordnet, welcher Grundwert vom Hersteller gewählt ist und in vielen Fällen ein optimales Arbeiten gewährleistet. In weiteren Feldern der Frontplatte sind andere Anzeigeorgane und Wählschalter zur Vorwahl bestimmter Operationen vorgesehen, die im Zusammenhang mit der Erfindung nicht von besonderem Interesse sind und keiner weiteren Erläuterung bedürfen.

Mit jedem der Einstellknöpfe 1 und 2 ist je eine kreisbogenförmige Blende 6 bzw. 7 verbunden, welche im Bereich eines geraden Schlitzes 8 bzw. 9 einer Frontabdeckung 10 verschwenkt werden kann. Die Blenden 6 und 7 bzw. die Schlitze 8 und 9 sind so bemessen, dass die Blenden entweder ganz aus dem Bereich der Schlitze geschwenkt oder aber dieselben vollständig abdecken können. Wie Fig. 2 zeigt, sind die Einstellknöpfe 1 und 2 je auf einer ringförmigen Nabe 11 einer Platte 12 gelagert. Die Blende 6 bzw. 7 ist in einer flachen Ausnehmung der Platte 12 angeordnet und ist derart profiliert, dass sie im Bereich des Schlitzes 8 bzw. 9 satt an die Hinterseite der Abdeckung 10 anliegt. Das unter dem Einstellknopf 1 bzw. 2 liegende Ende jeder Blende 6 bzw. 7 ist als Ring 13 ausgebildet, der auf einem Auge 14 drehbar zentriert ist. Ein Mitnahmestift 15 jeder Blende greift in eine Bohrung 16 des zugeordneten Einstellknopfes 1 bzw. 2, womit eine starre Kupplung und Mitnahme zwischen dem Einstellknopf und der Blende gewährleistet ist. Wie in Fig. 2 angedeutet, sitzt jeder Einstellknopf auf der Achse 17 eines Potentiometers 18. Jede aus einem Einstellknopf, einer Blende, einer Platte 12 und einem Potentiometer 18 bestehende Baueinheit ist mit einer weiteren Platte 19 verbunden. Zwischen einer Montageplatte 20 und der Platte 19 sind Halter 21 eingesetzt, welche mit Reihen von Leuchtdioden 22 versehen sind, welche durch Oeffnungen der Abdeckung 10 ragen.

Die Reihen von Leuchtdioden 22 sind parallel zu je einem der Schlitze 8 und 9 angeordnet, und zwischen jedem dieser Schlitze und der zugeordneten Reihe von Leuchten 22 liegt eine Skala 23 bzw. 24, welche die Stichlänge bzw. Stichbreite abzulesen gestattet. Die Schlitze 8 und 9 und die ihnen zugeordneten Skalen und Reihen von Leuchtdioden sind horizontal bzw. vertikal angeordnet, um sinnfällig die Zuordnung zur Stichbreite und zur Stichlänge anzudeuten. Die beiden Skalen 23 und 24 sind nicht ganz linear, einerseits, um eine gewisse Alinearität der Abdeckung der Schlitze 8 und 9 bei der Drehung der Blenden 6 bzw. 7 zu berücksichtigen, andererseits auch, um eine Häufung der Anzeigen in wichtigen Bereichen bzw. eine Streckung der Skala in Bereichen zu ermöglichen, wo eine besonders genaue Einstellung erforderlich ist. Insbesondere ist die Skala 23 am unteren Ende stark gedehnt, weil geringe Stichlängen besonders genau und fein eingestellt werden müssen, um optimale Ergebnisse zu erzielen. So ist beispielsweise auf der Skala 23 durch ein Symbol 25 angedeutet, dass dort ein günstiger Bereich zum Nähen von Knopflochraupen liegt.

Den beiden Einstell- und Anzeigeeinheiten, bestehend aus je einem Einstellknopf 1 bzw. 2, einer Blende 6 bzw. 7, einem Schlitz 8 bzw. 9, einer Skala 23 bzw. 24 und einer Reihe von Leuchtdioden 22 ist eine Taste 1b bzw. 2b eines Umschalters zugeordnet, mittels welchem in später erläuterter Weise von einer Betriebsart auf die andere umgeschaltet werden kann.

Wie oben erläutert, sind bestimmten vorprogrammierten Sticharten gemäss den Symbolen 5 oder anderen dargestellten, nicht näher erläuterten Symbolen Grund-Einstellwerte zugeordnet, welche in elektronischen Speichern abgespeichert sind. Sobald eine bestimmte Stichart bzw. Nähoperation gewählt ist, werden die entsprechenden Grundwerte durch eine der Leuchtdioden 22 angezeigt. Damit wird der Bedienungsperson angezeigt, welcher Wert für die Stichlänge und die Stichbreite im Normalfall empfohlen ist. Wenn nichts weiter unternommen wird, wird anschliessend der Nähvorgang diesem Grundwert entsprechend gesteuert, wobei die Steuerung in an sich bekannter Weise mittels des vorhandenen Mikroprozessors über entsprechende elektromechanische Einstellmittel, beispielsweise einen Schrittmotor, erfolgt.

Findet die Bedienungsperson, dass der angezeigte Grundwert für die auszuführende Näharbeit unter Berücksichtigung des zu nähenden Materials nicht optimal geeignet sei, kann sie durch Betätigung der Taste 1b und/oder 2b wahlweise für die Stichbreite oder die Stichlänge oder für beides auf manuelle Einstellung umschalten. Damit werden die Grundwerte aus den Speichern abgeschaltet bzw. wirkungslos gemacht, und die Steuerung erfolgt nun anhand der manuellen, willkürlichen Einstellung eines oder beider Einstellknöpfe 1 oder 2. Durch Drehen dieser Knöpfe werden die Blenden 6 und/oder 7 mitgedreht und decken einen mehr oder weniger grossen Teil der Schlitze 8 bzw. 9 ab, wie in Fig. 1 dargestellt. Der abgedeckte Bereich des Schlitzes reicht bis zu einer bestimmten Skalenstelle, und da der Grundwert durch eine der zugeordneten Leuchtdioden 22 immer noch angezeigt wird, kann die Bedienungsperson ohne weiteres feststellen, ob der manuell eingestellte Wert unter oder über dem empfohlenen Grundwert liegt. Bei der Umschaltung auf manuelle Einstellung kann auch die Anzeige der Leuchtdioden geändert werden, indem beispielsweise die vorher kontinuierlich leuchtenden Dioden blinken, um anzudeuten, dass jetzt nicht mehr der Grundwert für die Steuerung massgebend ist, sondern die manuelle, willkürliche Einstellung. Nach erfolgter manueller Einstellung ist die Maschine ohne weiteres bereit zur Ausführung der Näharbeit mit den willkürlich gewählten Werten für die Stichlänge und die Stichbreite. Die hierbei von den Potentiometern 18 abgegebenen, der manuellen Einstellung entsprechenden analogen Signale können in digitale Informationen umgewandelt werden, wenn die elektromechanischen Steuermittel digital arbeiten. Umgekehrt kann für die Steuerung eine Umwandlung der digital verfügbaren Grundwerte in Analogsignale erfolgen, wenn die Steuermittel analog arbeiten.

Durch erneuten Druck auf die Tasten 1b und 2b kann eine Rückschaltung von manueller Einstellung auf Grundwerte erfolgen. Damit wird die manuelle Einstellung unwirksam und es erfolgt eine automatische Steuerung anhand der gespeicherten Grundwerte. Es ist dabei insbesondere unmöglich, dass durch unbeabsichtigte, zufällige Verstellung eines der Einstellknöpfe 1 oder 2 die Steuerung durch den Grundwert beeinflusst wird. Sowohl die mechanischen als auch die elektronischen Mittel zur Vorwahl, Einstellung und Anzeige der verschiedenen Werte sind einfach und zuverlässig. Bei jedem Uebergang auf eine andere Stichart oder Abschaltung der Nähmaschine kann automatisch eine Umschaltung auf die Steuerung nach Grundwerten erfolgen.

Anstelle von zwei Umschaltern 1b und 2b zur individuellen Umschaltung für Stichlänge und Stichbreite könnte auch nur ein Umschalter vorhanden sein, der für beide Parameter jeweils entweder Steuerung nach Grundwerten oder Steuerung nach willkürlich gewählten Werten zu wählen erlaubt. Anstelle der dargestellten Schlitze 8 und 9 könnten Lochreihen vorgesehen sein, wobei die Schlitze oder Lochreihen und entsprechend die Skalen 23 und 24 sowie die Reihen von Leuchtdioden 22 auch kreisförmig, konzentrisch zu den Einstellknöpfen angeordnet sein könnten. Es ist auch möglich, anstelle von drehbaren Einstellknöpfen parallel zu den Schlitzen 8 bzw. 9 verschiebbare Stellelemente vorzusehen, die mit Blenden starr verbunden sind, die ebenfalls parallel zu den Schlitzen verschoben werden. Es könnten auch drehbare Einstellknöpfe vorgesehen sein, die mit einer Verzahnung in Zahnstangen von linear in Richtung der Schlitze 8 bzw. 9 verschiebbaren Blenden greifen.

Die Einstellvorrichtung mit drehbaren Blenden und geraden Schlitzen stellt jedoch eine ganz besonders elegante Lösung zur sinnfälligen Anzeige dar. Diese Einstellvorrichtung soll daher als Teil der Erfindung für sich geschützt sein.

**Patentansprüche**

1. Einstell- und Anzeigevorrichtung für mindestens einen Parameter, insbesondere die Stichlänge oder -breite an einer Nähmaschine, dadurch gekennzeichnet, dass zur manuellen, willkürlichen Wahl von Werten mindestens ein Einstellorgan (1,2) vorgesehen ist, das mit einer hinter mindestens einer Sichtdurchbrechung, z.B. einem Schlitz (8,9), bewegbaren Blende (6,7) gekoppelt ist.

2. Vorrichtung nach Anspruch 1, mit mindestens einem drehbaren Einstellorgan (1, 2) und einer zugeordneten Skala, dadurch gekennzeichnet, dass eine gerade Skala (23, 24) vorgesehen ist, der mindestens eine gerade verlaufende Sichtdurchbrechung (8, 9) zugeordnet ist, in deren Bereich eine mit dem Einstellorgan gekoppelte Blende (6, 7) bewegbar ist, welche die Sichtdurchbrechung der Einstellung entsprechend mehr oder weniger abdeckt.

3. Vorrichtung nach Anspruch 1, dadurch gekennzeichnet, dass die Blende (6, 7) starr mit dem Einstellorgan (1, 2) verbunden ist.

4. Vorrichtung, insbesondere nach Anspruch 1 oder 2, wobei wahlweise vorprogrammierte Grundwerte oder mittels des Einstellorgans (1, 2) willkürlich gewählte Werte des Parameters einstellbar, steuerbar und anzeigbar sind, dadurch gekennzeichnet, dass getrennte Anzeigen für Grundwerte (22) und willkürlich gewählte Werte (6-9) vorgesehen sind, und dass Umschaltmittel (1b, 2b) zur Steuerung entweder nach einem Grundwert oder nach einem willkürlich gewählten Wert vorgesehen sind.

5. Vorrichtung nach Anspruch 4, wobei sich die Grundwerte in elektronischen Speichern befinden, dadurch gekennzeichnet, dass zur Anzeige der Grundwerte je eines Parameters eine Reihe von einzelnen Leuchten, z.B. Leuchtdioden (22), vorgesehen ist.

6. Vorrichtung nach Anspruch 5, dadurch gekennzeichnet, dass die Leuchten (22) unterschiedlich, z.B. kontinuierlich oder blinkend, gespeist werden, je nachdem ob eine Steuerung nach einem Grundwert oder nach einem willkürlich gewählten Wert erfolgt.

7. Vorrichtung nach einem der Ansprüche 4 - 6, dadurch gekennzeichnet, dass jedem Parameter separate Umschaltmittel (1b, 2b) zugeordnet sind.

0291451

**FIG.1**

**FIG.2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 429 579 (BOSCH-SIEMENS) <br> * Seite 3, Zeilen 14-19; Figur 2 * <br> --- | 1 | G 05 B 19/10 |
| Y | FR-A-2 415 830 (SCHOLTES) <br> * Das ganze Dokument * <br> --- | 1-7 | |
| Y | DE-A-3 048 991 (LICENTIA PATENT-VERWALTUNG-GmbH) <br> * Das ganze Dokument * <br> --- | 1-7 | |
| A | US-A-4 307 383 (BRIENZA) <br> * Das ganze Dokument * <br> --- | 1-7 | |
| A | US-A-4 236 467 (TANAKA) <br> * Das ganze Dokument * <br> --- | 1-7 | |
| A | EP-A-0 177 441 (GEGAUF) <br> * Das ganze Dokument * <br> --- | 1-7 | |
| A | US-A-4 206 336 (CUNNINGHAM) <br> * Zusammenfassung; Figur 2 * <br> --- | 1-7 | RECHERCHIERTE SACHGEBIETE (Int. Cl.4) |
| A | GB-A-2 161 958 (TOSHIBA) <br> * Das ganze Dokument * <br> ----- | 1-7 | G 05 B |

Der vorliegende Recherchenbericht wurde für alle Patentansprüche erstellt

| Recherchenort | Abschlußdatum der Recherche | Prüfer |
|---|---|---|
| DEN HAAG | 30-08-1988 | RESSENAAR J.P. |

EPO FORM 1503 03.82 (P0403)